# FASCICULE DE BREVET EUROPEEN

(11) **EP 3 048 385 B1**
(45) Date de publication et mention de la délivrance du brevet: **21.03.2018**
(21) Numéro de dépôt: 16151968.1
(22) Date de dépôt: 19.01.2016
(51) Int. Cl.: F24J 2/46, F24J 2/07, F24J 2/08, F23C 3/00, F23C 13/00

(54) **MODULE DE COMBUSTION PRESENTANT UNE SECURITE DE FONCTIONNEMENT AMELIOREE ET UN RENDEMENT THERMIQUE OPTIMISE**
VERBRENNUNGSMODUL, DAS EINE VERBESSERTE BETRIEBSSICHERHEIT UND EINE OPTIMIERTE WÄRMELEISTUNG AUFWEIST
COMBUSTION MODULE WITH IMPROVED OPERATIONAL SAFETY AND OPTIMISED THERMAL EFFICIENCY

(30) Priorité: 20.01.2015 FR 1550449
(43) Date de publication de la demande: 27.07.2016
(73) Titulaire: Commissariat à l'Énergie Atomique et aux Énergies Alternatives, 75015 Paris (FR)
(72) Inventeur: OLLIER, Emmanuel, 38000 GRENOBLE (FR); MANTZARAS, Ioannis, 8037 ZURICH (CH)
(74) Mandataire: Brevalex

(56) Documents cités:
- WO-A1-2012/136800
- WO-A1-2014/048992

## Description

### DOMAINE TECHNIQUE ET ART ANTÉRIEUR

La présente invention se rapporte à un module de combustion présentant une sécurité de fonctionnement améliorée et un système solaire hybride comportant au moins un tel module de combustion.

Il existe des dispositifs de production d'électricité comportant un module de combustion et un module thermoélectrique, la face chaude du module thermoélectrique étant en contact avec l'une des faces du module de combustion. En brûlant un ou des gaz dans le module de combustion, la face du module thermoélectrique en contact avec le module de combustion est échauffée, un gradient de température apparaît dans le module thermoélectrique, il y alors production d'électricité.

Un exemple de tel dispositif est décrit dans le document US 7 862 331.

Le module de combustion comporte une chambre alimentée en gaz par au moins un tuyau d'alimentation, les gaz de combustion sont évacués par au moins un conduit d'évacuation.

Le matériau du module présente une très bonne conductivité thermique puisque l'on souhaite utiliser la chaleur produite dans le module à l'extérieur du module. Dans ce type de module, la température est de l'ordre de 600°C. Les tuyaux d'alimentation et d'évacuation sont alors par exemple en acier.

Il est d'une part souhaitable de réduire les pertes thermiques de la chambre de combustion vers l'extérieur en dehors de la surface en contact avec le module thermoélectrique. Or les tuyaux d'alimentation et d'évacuation, qui sont généralement, en métal, plus particulièrement en acier, peuvent être source de pertes thermiques.

Par ailleurs, dans le cas où l'on souhaite atteindre dans le module de combustion une température supérieure à 700°C, voire 800°C ou plus, il existe des risques d'auto-inflammation du gaz dans le tuyau d'alimentation ; puisque le tuyau d'alimentation se trouve être également chauffé à très haute température. La sécurité de fonctionnement de ce module de combustion peut être améliorée.

Le document WO2014/048992 décrit un dispositif solaire hybride de production d'électricité comportant une première face soumise au rayonnement solaire, une deuxième face en contact avec un générateur thermoélectrique et par exemple une chambre de combustion entre la première face et la deuxième face, cette chambre de combustion forme une source de chaleur additionnelle capable de compenser les variations du flux solaire. Dans ce type de dispositif on souhaite pouvoir atteindre une température de l'ordre de 800°C.

### EXPOSÉ DE L'INVENTION

C'est par conséquent un but de la présente invention d'offrir un module de combustion comportant une chambre de combustion d'au moins un gaz offrant une sécurité de fonctionnement améliorée et pouvant atteindre des températures plus élevées que les modules de l'état de la technique.

Le but énoncé ci-dessus est atteint par un module de combustion comportant au moins une chambre de combustion, au moins une entrée d'alimentation en gaz de ladite chambre, au moins une sortie d'évacuation de ladite chambre, et au moins un connecteur en matériau isolant thermique disposé au niveau de l'entrée d'alimentation, le ou les tuyaux d'alimentation en au moins un gaz étant connecté(s) à la chambre de combustion via le connecteur isolant thermique.

La température au moins au niveau d'une extrémité distale du connecteur isolant thermique est sensiblement réduite par rapport à celle de la chambre de combustion, ainsi le ou les tuyaux d'alimentation en gaz ne sont pas échauffés à des températures pouvant provoquer les risques d'auto-inflammation du gaz de combustion, les risques d'auto-inflammation sont donc évités ou pour le moins notablement réduits. Par ailleurs, les fuites thermiques via le tuyau d'alimentation sont réduites, ce qui améliore le rendement du module.

De manière avantageuse, le module de combustion comporte également un connecteur isolant thermique au niveau de la sortie d'évacuation ce qui permet de réduire davantage les fuites thermiques.

De manière préférée, le connecteur d'alimentation assure également une fonction de distribution et/ou de mélange du ou des gaz dans la chambre. Il comporte par exemple une entrée et plusieurs orifices de sortie. Cette réalisation a également pour avantage de simplifier la connexion entre le module de combustion et le ou les tuyaux d'alimentation en gaz l'environnement extérieur. De manière similaire le connecteur d'évacuation comporte par exemple plusieurs orifices d'entrée et un orifice de sortie.

Avantageusement la distribution est uniforme dans les différentes chambres de combustion, i.e. les débits entrant dans chaque chambre sont sensiblement égaux.

Le connecteur d'alimentation et/ou le connecteur d'évacuation sont par exemple en zircone, mullite, alumine et la ou les chambres de combustion sont par exemple réalisées en carbure de silicium SiC.

La présente invention a alors pour objet un module de combustion comportant un corps comprenant une chambre de combustion, au moins un connecteur d'alimentation de la chambre de combustion en gaz destiné(s) à être brulé(s) dans la chambre de combustion, ledit connecteur d'alimentation comportant au moins un orifice d'entrée destiné à être connecté à au moins une source de gaz par l'intermédiaire d'un conduit et au moins un orifice de sortie destinée à être connectée à la au moins une chambre de combustion et le connecteur d'alimentation présentant une conductivité thermique sensiblement plus faible que celle du corps de telle que sorte que le connecteur d'alimentation assure que la température au niveau de l'orifice d'entrée du connecteur d'alimentation et le conduit soit inférieure à la température d'auto-inflammation du ou des combustibles.

Le module comporte avantageusement un connecteur d'évacuation présentant une conductivité thermique sensiblement plus faible que celle du corps.

Le matériau du connecteur d'alimentation a avantageusement une conductivité thermique inférieure à 50 W/m.K, préférentiellement inférieure à 10W/m.K. Avantageusement le matériau du connecteur d'évacuation a également une conductivité thermique inférieure à 50 W/m.K, préférentiellement inférieure à 10W/m.K.

Dans un exemple de réalisation, le corps comporte plusieurs chambres de combustion et le connecteur d'alimentation comporte alors un orifice d'entrée et autant d'orifices de sortie que de chambres de combustion et un réseau de distribution du combustible entre l'orifice d'entrée et les orifices de sortie.

Dans un autre exemple de réalisation, le corps comporte plusieurs chambres de combustion et le connecteur d'alimentation comporte au moins deux orifices d'entrée et autant d'orifices de sortie que de chambres de combustion, un réseau de distribution du combustible entre les orifices d'entrée et les orifices de sortie, et une zone de mélange située en aval des deux orifices d'entrée et en amont ou en aval du réseau de distribution. Le réseau de distribution et/ou la zone de mélange peut avantageusement comporter une structure poreuse.

De préférence, la structure poreuse est en matériau isolant thermique.

Dans un autre exemple de réalisation, le corps comporte plusieurs chambres de combustion et le connecteur d'évacuation comporte des moyens de collecte des gaz de combustion en sortie des chambres de combustion et un orifice de sortie.

Selon une caractéristique additionnelle, le connecteur d'alimentation peut comporter des moyens d'emboîtement dans le corps au niveau de la connexion entre la au moins une chambre de combustion et un orifice de sortie du connecteur d'alimentation.

Le corps peut présenter sensiblement la forme d'un parallélépipède rectangle comprenant deux faces de plus grandes surfaces, reliées par deux faces latérales et deux faces d'extrémité, la au moins une chambre de combustion débouchant dans les faces d'extrémité.

Le corps est par exemple en SiC et le connecteur d'alimentation et le connecteur d'évacuation sont par exemple en zircone.

La présente invention a également pour objet un dispositif de combustion comportant au moins un module de combustion selon l'invention, au moins une source de gaz et un conduit connecté à l'orifice d'entrée du connecteur d'alimentation et à la source de gaz.

De préférence, le dispositif de combustion comporte une source de combustible et une source de comburant, par exemple une source de H₂ et une source d'oxygène respectivement. Le connecteur d'alimentation peut comporter soit deux orifices d'entrée connectés chacun à une source, soit un seul orifice d'entrée connecté à un dispositif mélangeur connecté aux deux sources.

La présente invention a également pour objet un système solaire hybride comportant des moyens de concentration du rayonnement solaire, au moins un module de combustion selon l'invention ou un dispositif de combustion de combustion selon l'invention, le module ou le dispositif étant disposé de sorte que les rayonnement concentré éclaire une face du corps et des moyens de conversion d'une énergie thermique en électricité sur une face opposée à celle éclairée par le rayonnement solaire concentré, et des moyens de commande de la combustion dans le module de combustion en fonction du rayonnement solaire concentré.

Les moyens de concentration du rayonnement solaire peuvent comporter au moins un miroir ou une lentille de Fresnel.

### BRÈVE DESCRIPTION DES DESSINS

La présente invention sera mieux comprise à l'aide de la description qui va suivre et des dessins en annexe, sur lesquels :
- la figure 1 est une vue de dessus représentée schématiquement d'un exemple de réalisation du module de combustion,
- les figures 2A et 2B sont des vues de dessus représentées schématiquement d'exemples de connexion entre les éléments du module de combustion,
- la figure 3 est une vue de dessus représentée schématiquement d'un autre exemple de réalisation du module de combustion dans lequel le connecteur d'alimentation forme un distributeur,
- la figure 4 une vue de dessus représentée schématiquement d'un exemple de réalisation du module de combustion dans lequel le connecteur d'alimentation forme un distributeur et un mélangeur,
- la figure 5 est une vue de dessus représentée schématiquement d'un module de combustion à une seule entrée,
- la figure 6 une vue de dessus représentée schématiquement d'une variante de réalisation du module de la figure 5 dans laquelle le connecteur d'alimentation a deux entrées,
- la figure 7 est une vue de dessus représentée schématiquement d'une variante de réalisation d'un autre connecteur d'alimentation à deux entrées perpendiculaires au plan du module de combustion,
- la figure 8 est une vue de dessus représentée schématiquement d'un autre exemple de réalisation d'un module de combustion, présentant un distributeur en entrée et une évacuation à une seule sortie,
   la figure 9A est une vue en coupe longitudinale vue de dessus représentée schématiquement d'un autre exemple de réalisation d'un module de combustion,
- la figure 9B est une vue en coupe longitudinale vue de dessus représentée schématiquement d'une variante du module de la figure 9A,
- la figure 10 est une représentation graphique de la variation de température le long d'une direction longitudinale s'étendant entre le connecteur d'alimentation et le connecteur d'évacuation,
- la figure 11 est une représentation schématique d'un système solaire hybride mettant en oeuvre le module de combustion selon l'invention,
- la figure 12 est une vue de côté d'un exemple de module de combustion, dans lequel chaque chambre de combustion présente un dépôt de catalyseur de combustion.

### EXPOSÉ DÉTAILLÉ DE MODES DE RÉALISATION PARTICULIERS

Dans la description qui va suivre, l'amont est à considérer du côté de l'alimentation et l'aval est à considérer du côté de l'évacuation. Par ailleurs, à des fins de simplicité, l'air sera désigné comme un gaz et non un mélange de gaz.

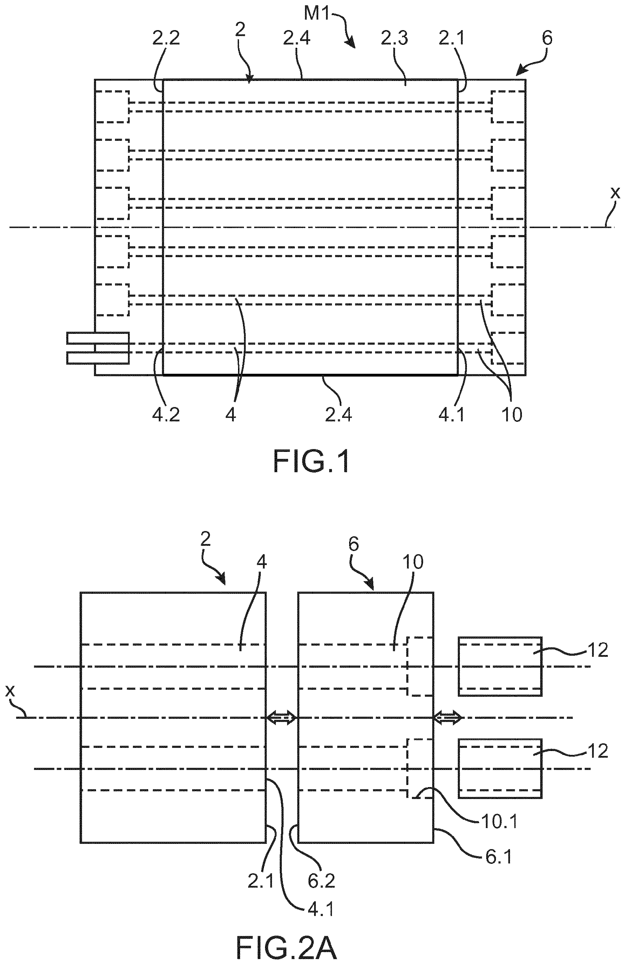

Sur la figure 1, on peut voir un exemple de module de combustion M1 comportant un corps 2 comprenant une pluralité de chambres de combustion 4, un connecteur d'alimentation 6 et un connecteur d'évacuation 8.

Le corps 2 s'étend le long d'une direction longitudinale X et présente une première face longitudinale 2.1 ou première face d'extrémité 2.1 et une deuxième face longitudinale 2.2 ou deuxième face d'extrémité 2.2. Dans l'exemple représenté, le corps a la forme d'un parallélépipède rectangle. Il comporte en outre des faces supérieures 2.3 et inférieure (non visible) qui présentent une plus grande surface et deux faces latérales 2.4.

Les chambres de combustion 4 s'étendent parallèlement à une direction X.

De préférence, les chambres de combustion 4 sont réparties de manière variable dans le corps selon une direction transversale, avantageusement elles sont plus rapprochées au niveau des faces latérales afin de compenser les pertes thermiques.

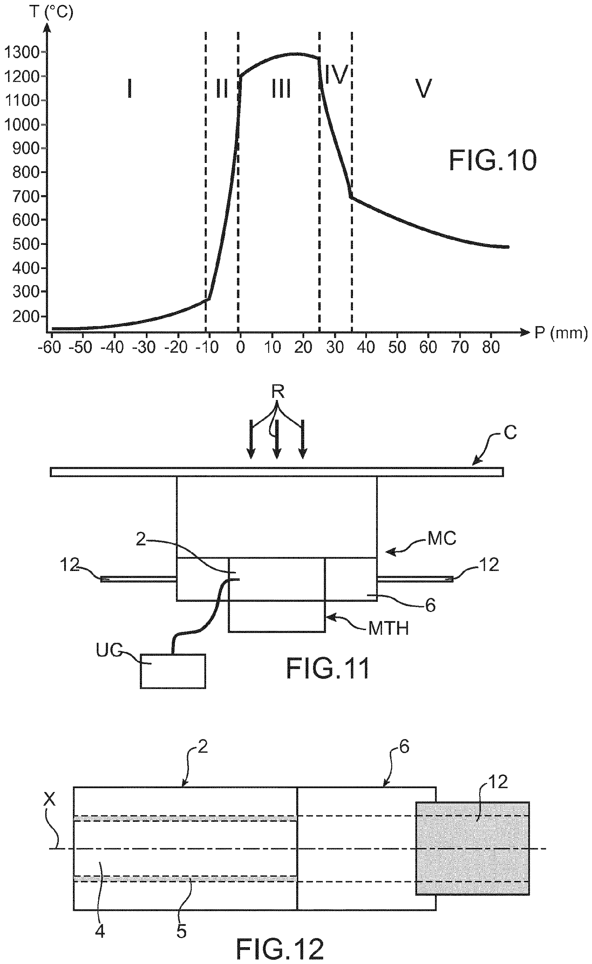

Dans l'exemple représenté, chaque chambre 4 se présente sous la forme d'un canal dont une première extrémité 4.1 débouche dans la première face 2.1 et dont une deuxième extrémité 4.2 débouche dans la deuxième face 2.2. De manière avantageuse, chaque chambre 4 comporte avantageusement à sa surface une couche 5 de matériau d'une certaine épaisseur recouvrant la surface interne des chambres de combustion, ce matériau présentant une activité catalytique pour initier et entretenir la combustion des gaz (figure 12).

En variante, la combustion peut également être initiée par un apport d'énergie extérieur comme par exemple une étincelle, une résistance chauffante. Dans le cas d'un module utilisé de façon hybride qui associe à la fois l'énergie solaire et l'énergie issue d'une combustion, l'énergie peut être simplement celle apportée par la concentration du rayonnement solaire sur le corps.

Un module de combustion comportant une seule chambre de combustion et/ou des chambres présentant d'autres formes ne sort pas du cadre de la présente invention.

La première extrémité de la chambre 4 est destinée à l'alimentation en gaz (combustible et comburant) en vue de la combustion et la deuxième extrémité 4.2 est destinée à l'évacuation des gaz de combustion et des gaz imbrûlés éventuels.

Dans l'exemple représenté, le connecteur d'alimentation 6 comporte autant d'alésages traversant 10 que de chambres de combustion 4, chacun des alésages 10 étant destiné à être aligné avec une extrémité d'alimentation 4.1 d'une chambre de combustion 4.

Le connecteur d'alimentation 6 comporte une première face d'extrémité 6.1 destinée à être reliée à une ou des sources de gaz via les tubes d'alimentation 12 et une deuxième face d'extrémité 6.2 en contact avec la face longitudinale 2.1 du corps. Les alésages 10 débouchent dans la première face d'extrémité 6.1 et dans la deuxième face d'extrémité 6.2.

Le connecteur d'alimentation 6 est réalisé en un matériau isolant thermique de sorte qu'il limite le transfert de chaleur du module de connexion vers l'extérieur dans la direction X. Le matériau du connecteur d'alimentation 6 présente une conductivité thermique sensiblement inférieure à celle du matériau du corps 2.

L'isolation thermique procurée par le connecteur d'alimentation est telle que la température sur sa face d'extrémité 6.1 soit suffisamment réduite par rapport à celle sur sa face 6.2 en contact avec le corps pour éviter une auto-inflammation du ou des gaz combustibles dans le ou les tuyaux d'alimentation 12.

On entend dans la présente demande par "matériau isolant thermique" un matériau de conductivité thermique inférieure à 50W/m.K, de préférence inférieure à 10W/m.K. La conductivité thermique est de préférence au moins 5 fois inférieure à celle du corps. Ce matériau peut être par exemple la zircone, la mullite, la cordiérite ou l'alumine.

Le corps quant à lui est par exemple réalisé en un matériau bon conducteur thermique, c'est-à-dire présentant une conductivité thermique supérieure à 30W/m.K à température ambiante, de préférence supérieure à 100W/m.K. Il peut s'agir par exemple de carbure de silicium, d'acier, d'Inconel® ou autres alliages.

Sur la figure 2A, on peut voir une vue de détail du module de la figure 1 au niveau de la connexion entre le connecteur d'alimentation 6 et le corps 2 d'une part et entre le connecteur d'alimentation 6 et les tubes d'alimentation 12 en gaz d'autre part. Les tubes d'alimentation 12 sont connectés à une ou des sources de gaz. Par exemple, les gaz destinés à être brulés dans la chambre de combustion sont par exemple du dihydrogène ou un mélange de dihydrogène et de méthane ou du méthanol avec du dioxygène ou de l'air.

Dans l'exemple représenté, la deuxième face d'extrémité 6.2 et la face longitudinale 2.1 sont en appui plan et solidarisées l'une à l'autre de sorte à assurer une connexion étanche entre les alésages 10 et les chambres de combustion 4.

En outre dans l'exemple réalisé, les extrémités des alésages 10 débouchant dans la première face d'extrémité 2.1 comportent une portion de plus grand diamètre 10.1 permettant de loger les extrémités de tubes d'alimentation 12.

Les tubes 12 peuvent par exemple être en métal ou en alliages métalliques, par exemple en acier. Or, du fait de la présence du connecteur isolant thermique interposé entre le corps et les tubes d'alimentation, leur température est réduite par rapport à celle de la chambre de combustion 4 et les risques d'auto-inflammation sont sensiblement réduits. L'isolation thermique procurée par le connecteur d'alimentation est due au matériau isolant thermique et aux dimensions du connecteur d'alimentation, notamment dans la direction X.

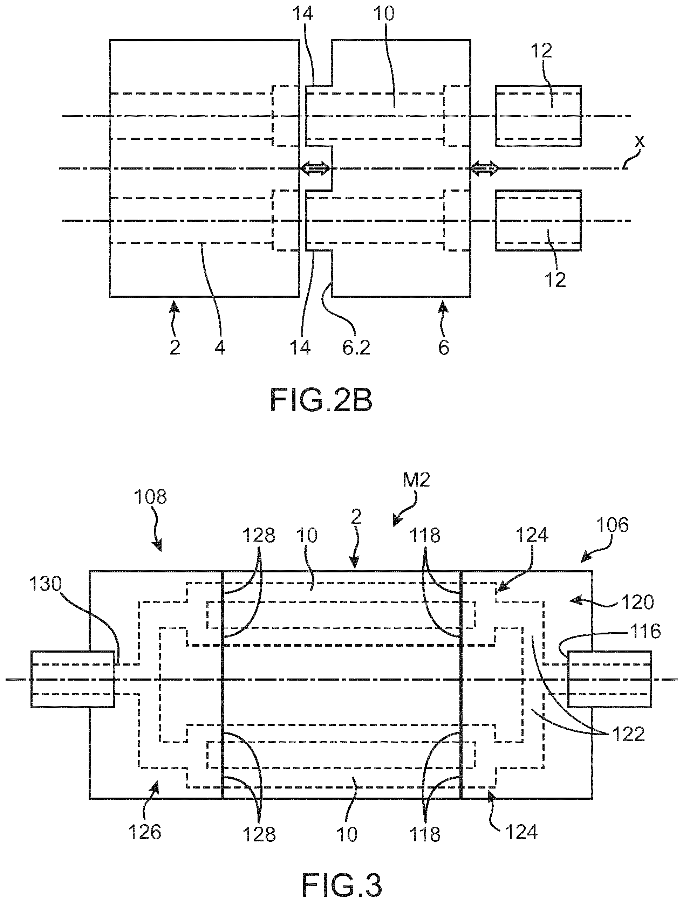

Sur la figure 2B, on peut voir une variante de réalisation du connecteur d'alimentation 6 dans laquelle la deuxième face d'extrémité 6.2 comporte des saillies annulaires 14. Chaque saillies annulaires 14 borde une extrémité débouchante des alésages 10 dans la face d'extrémité 2.2. Les saillies annulaires 14 pénètrent dans une extrémité des chambres débouchant dans la face d'extrémité 2.1 par emboîtement. L'extrémité de la chambre de combustion a un diamètre suffisant pour recevoir cette saillie annulaire 14. Grâce à cette variante, l'étanchéité de connexion entre le connecteur et le corps est améliorée ainsi que sa robustesse, sa réalisation est simplifiée et l'alignement entre les alésages 10 et les chambres 4 est simplifié.

Dans l'exemple représenté et de manière très avantageuse, le module de combustion comporte également un connecteur d'évacuation 8 qui est de préférence en matériau isolant thermique. Dans l'exemple représenté la structure du connecteur d'évacuation 8 est sensiblement celle du connecteur d'alimentation 6. Il peut également avoir la structure du connecteur d'alimentation de la figure 2B. Mais il sera compris que cela n'est pas limitatif et qu'il peut avoir une structure différente.

Il peut par exemple ne pas être en matériau isolant thermique puisqu'il n'y a pas ou très peu de risque d'auto-inflammation. Néanmoins s'il offre une isolation thermique il permet de réduire les pertes thermiques et donc d'améliorer la récupération de la chaleur. En outre, puisque la température en sortie du connecteur d'évacuation est sensiblement plus faible que celle dans le corps, il permet d'utiliser des tubes d'évacuation en acier ou plus généralement en matériau offrant une résistance moindre en température.

Ce module de combustion peut être avantageusement mis en oeuvre pour réaliser un système solaire hybride dans lequel la face supérieure est soumise au rayonnement solaire et la face inférieure est en contact avec des modules thermoélectriques, la chaleur produite par la chambre de combustion permettant de compenser les variations d'ensoleillement et d'avoir un fonctionnement sensiblement continu et constant des modules thermoélectriques. Un exemple d'un tel système sera décrit plus en détail ci-dessous.

En variante, la face inférieure peut également comporter une surface optique émettant un rayonnement infrarouge en direction d'une cellule thermophotovoltaïque apte à convertir le rayonnement infrarouge émis en puissance électrique.

De préférence, au moins pour l'application à un système solaire, plusieurs chambres de combustion sont réparties dans un seul plan parallèle aux faces inférieure et supérieure pour assurer une conduction de la chaleur de la face supérieure vers la face inférieure.

Sur la figure 10, on peut voir la variation de T température en °C du module de combustion de la figure 1 en fonction de la position P en mm selon l'axe des abscisses est située sur l'intérieur d'un canal de combustion dans le corps 2 et dans les zones d'alimentation et d'évacuation des gaz du canal correspondant. Un mélange air et H₂ est brûlé dans les chambres de combustion.

Les deux connecteurs sont en zircone et ont une dimension dans la direction X de 10 mm et le corps est en SiC et a une dimension dans la direction X de 25 mm, une dimension dans une direction transversale à la direction X de 25 mm et une distance entre la face supérieure et la face inférieure de 5 mm.

La zone I correspond aux tubes d'alimentation 12, la zone II correspond au connecteur d'alimentation 6, la zone III correspond au corps 2, la zone IV correspond au connecteur d'évacuation 8 et la zone V correspond aux tuyaux d'évacuation.

La température dans le corps atteint 1300°C alors que la température dans les tubes d'alimentation est inférieure à 300°C évitant tout risque d'auto-inflammation qui ne survient généralement qu'à une température supérieure à 600°C dans des conditions stoechiométriques. Cette différence de température est obtenue grâce au connecteur d'alimentation 6 isolant thermique. On constate en effet que celui-ci impose un gradient de température important entre la face 6.1 du connecteur d'alimentation 6 sur laquelle sont branchés les tubes d'alimentation 12 et la face 6.2 du connecteur d'alimentation en contact avec le corps 2.

La température en sortie du connecteur d'évacuation 8 est de l'ordre de 700°C. Le gradient de température dans le connecteur d'évacuation est inférieur à celui dans le connecteur d'alimentation 6 car les gaz sortant sont chauds. Néanmoins, cette température plus élevée en sortie du connecteur d'évacuation n'est pas gênante puisqu'il n'y a pas de risque d'auto-inflammation. De plus la température de 700°C est suffisamment faible pour permettre d'utiliser des tubes en acier. Le connecteur d'évacuation réduit les pertes thermiques au niveau de la face 2.2 du corps.

Le matériau du connecteur d'alimentation et ses dimensions sont choisis en fonction de la différence de température souhaitée entre les tubes d'alimentation et le corps.

Les températures au-delà desquelles un risque d'auto-inflammation existe diffèrent suivant les gaz destinés à être brûlés dans la ou les chambre de combustion, par exemple la température à pression atmosphérique est de 535°C pour le CH₄, de 450°C pour le C₃H₈, de 287°C pour le C₄H₁₀.

De préférence, cette différence de température est comprise entre 100°C et 1000°C. De préférence le matériau du connecteur d'alimentation présente de préférence une conductivité thermique inférieure à 50 W/m.K, et de manière préférée une conductivité thermique inférieure à 30 W/m.K. Le matériau isolant thermique peut être par exemple la zircone, la mullite ou l'alumine. Le corps est en matériau conducteur thermique et résistant aux hautes températures comme le carbure de silicium SiC, un acier réfractaire ou encore un Inconel.

De préférence les faces latérales du corps sont isolées thermiquement pour limiter encore les pertes thermiques.

Sur a figure 3, on peut voir un exemple de réalisation d'un module M2 de combustion dans lequel le connecteur d'alimentation assure également une fonction de distribution.

Dans cet exemple le corps 2 comporte quatre chambres de combustion 10.

Le connecteur d'alimentation 106 comporte un seul orifice d'entrée 116 connecté à la ou aux sources de gaz de t quatre orifices de sortie 118 alignés avec les quatre chambre de combustion. Le connecteur d'alimentation 106 est en matériau isolant thermique.

Dans cet exemple, les gaz sont mélangés avant d'être envoyés dans le connecteur d'alimentation ce qui permet de n'avoir qu'un orifice d'entrée.

Le connecteur d'alimentation comporte alors en son sein un réseau de distribution 120 qui permet de distribuer le gaz ou mélanges de gaz dans les quatre chambres de combustion.

Dans l'exemple représenté, le réseau de canaux comporte deux canaux 122 connectés à l'orifice d'entrée et deux paires de sous canaux 124, chaque sous-canal 124 est connecté par une extrémité à un canal 122 et par une autre extrémité à un orifice de sortie 118. Le flot de gaz est alors divisé en deux, puis encore divisé en deux pour alimenter uniformément les quatre chambres de combustion.

La mise en oeuvre d'un tel connecteur d'alimentation permet, outre la réduction de la température au niveau du tube d'alimentation en gaz, de réduire le coût du module puisqu'un seul tube relie la ou les sources de gaz au connecteur d'alimentation, de simplifier la fabrication et de réduire les pertes thermiques puisque les fuites thermiques n'ont lieu que le long d'un seul tube.

En outre les gaz se mélangent encore en circulant dans le connecteur d'alimentation.

Dans l'exemple représenté, le connecteur d'évacuation 108 présente une forme symétrique de celle du connecteur d'alimentation. Il comporte un réseau de canaux 126 comprenant quatre entrées 128 connectées aux quatre sorties des chambres de combustion et une sortie 130. Le réseau de canaux 126 n'a pas une fonction de distribution mais de collecte et de regroupement des gaz sortant des chambres de combustion vers une sortie unique.

Comme pour le connecteur d'alimentation, cette structure de connecteur d'évacuation permet de réaliser des modules de combustion présentant un coût de revient réduit et une fabrication simplifiée. En outre, les fuites thermiques sont réduites. Par ailleurs, le fait d'avoir des connecteurs d'alimentation et d'évacuation identiques permet de n'avoir qu'une seule référence de connecteur pour la fabrication, ce qui réduit les coûts de fabrication, de stockage, de gestion et simplifie la fabrication.

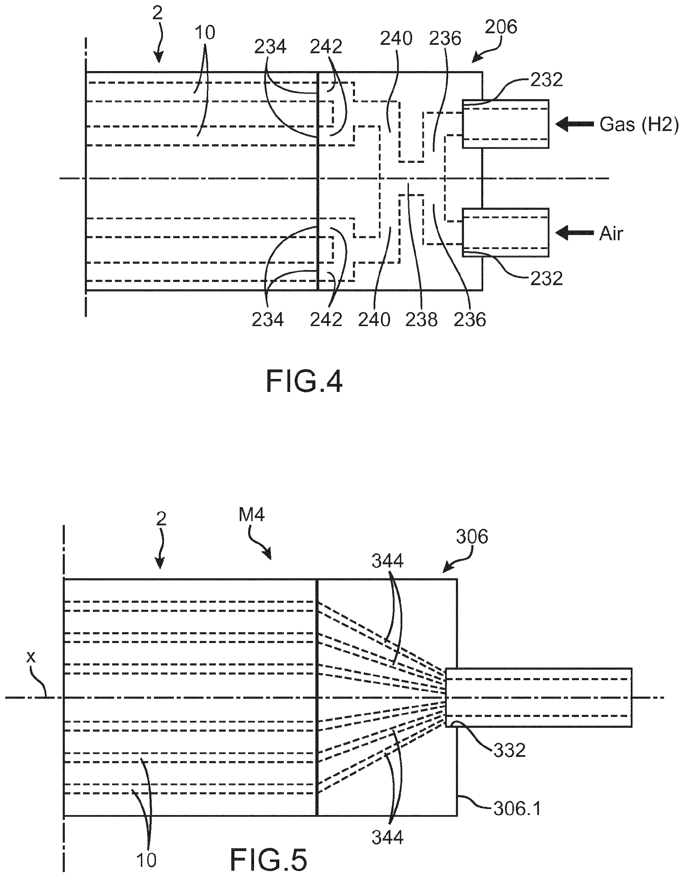

Sur la figure 4, on peut voir un autre exemple de réalisation d'un module de combustion M3 dans lequel seul le corps 2 et le connecteur d'alimentation 206 sont représentés. Le corps 2 comporte quatre chambres de combustion 10.

Le connecteur d'alimentation comporte deux orifices d'entrée 232, quatre orifices de sortie 234 reliées aux chambres de combustion et un réseau de canaux et sous-canaux pour relier les deux orifices d'entrée 232 aux quatre orifices de sortie 234.

Le réseau comporte deux premiers canaux 236 connectés chacun à un orifice d'entrée 232, une chambre de mélange 238 dans laquelle les deux canaux 236 débouchent, deux deuxièmes canaux 240 partant de la chambre de mélange 238 qui se divisent chacun en une paire de sous-canaux 242 débouchant dans deux orifices de sortie 234.

De manière avantageuse, chaque orifice d'entrée est connecté à une source de gaz différente, par exemple l'un est connecté à une source d'oxygène ou d'air et l'autre à une source de H₂. Les deux sont mélangés dans la chambre de mélange 238 avant d'être distribués vers les quatre chambre de combustion. Ce connecteur évite de devoir procéder à un prémélange des gaz, ce qui pourrait se révéler dangereux.

De manière très avantageuse, la chambre de mélange peut comporter des moyens pour favoriser le mélange, par exemple elle peut être remplie en tout ou partie par une structure poreuse, par exemple un empilement de bille ou un matériau poreux. La structure peut être macroporeuse ou alors microporeuse.

Le connecteur d'évacuation qui n'est pas représenté peut avoir une structure symétrique par rapport à celle du connecteur d'alimentation, néanmoins la mise en oeuvre de deux orifices de sortie, et d'une chambre de mélange n'apportent pas d'avantage du côté de l'évacuation. De préférence le connecteur d'évacuation peut avoir une structure proche de ou identique à celle du connecteur de la figure 3.

Sur la figure 5, on peut voir un autre exemple de réalisation d'un module de combustion M5 pour lequel seul le corps 2 et le connecteur d'alimentation 306 sont représentés. Le connecteur d'alimentation 306 comporte un orifice d'entrée 332 dans la face longitudinale 306.1 et autant de canaux 344 que de chambres de combustion 10, six dans l'exemple représenté. Un tuyau d'alimentation est connecté à l'orifice d'entrée 332, qui est lui-même connecté à tous les canaux 344 et alimente ceux-ci en parallèle. Dans l'exemple représenté, les canaux 344 sont répartis en éventail à partir de l'orifice d'entrée. Cet exemple de réalisation présente l'avantage, par rapport au connecteur d'alimentation de la figure 1, de réduire le nombre d'orifices d'entrée et donc de réduire les fuites thermique par les tubes d'alimentation, et également de réduire les coûts de fabrication. Le connecteur d'évacuation qui n'est pas représenté peut présenter une forme symétrique de celle du connecteur d'alimentation ou une autre structure. En outre, il est rappelé qu'un module de combustion sans connecteur d'évacuation ne sort pas du cadre de la présente invention.

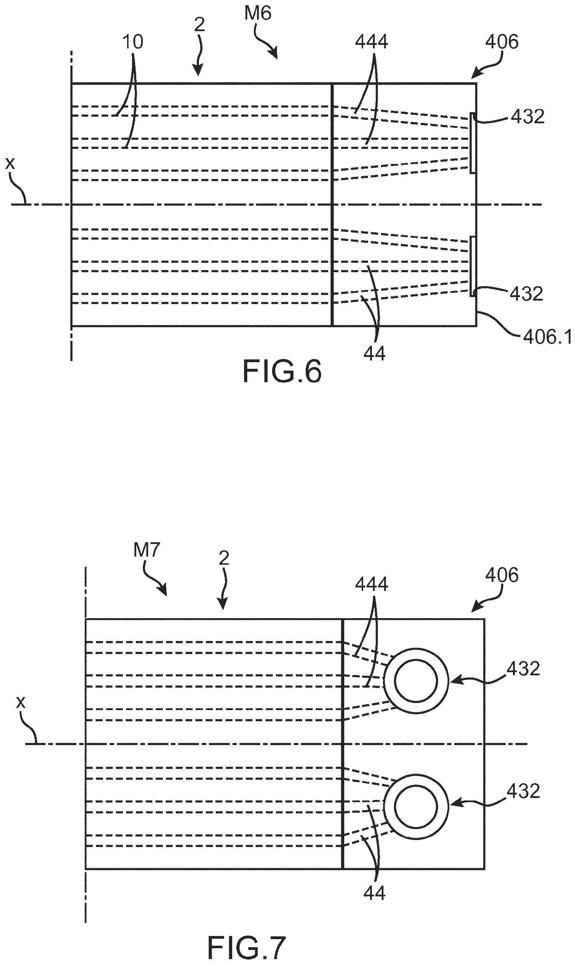

Sur la figure 6, on peut voir une variante du module de combustion M6 de la figure 5 lequel seul le corps 2 et le connecteur d'alimentation 406 sont représentés.

Le connecteur d'alimentation comporte deux orifices d'entrée 432 dans la face longitudinale 406.1 et autant de canaux 444 que de chambres de combustion 10, six dans l'exemple représenté. Chaque orifice d'entrée 432 est connecté à trois canaux, ceux-ci sont donc alimentés simultanément par l'orifice d'entrée. Dans l'exemple représenté, les canaux sont répartis en éventail à partir de l'orifice d'entrée. Cet exemple de réalisation présente l'avantage par rapport au connecteur d'alimentation de la figure 1, de réduire le nombre d'orifices d'entrée et donc de réduire les fuites thermiques par les tubes d'alimentation et également de réduire les coûts de fabrication.

Le connecteur d'évacuation qui n'est pas représenté peut présenter une forme symétrique de celle du connecteur d'alimentation ou une autre structure. En outre, il est rappelé qu'un module de combustion sans connecteur d'évacuation ne sort pas du cadre de la présente invention.

Sur la figure 7, on peut voir une variante de réalisation M7 du module de la figure 6 dans lequel les orifices d'entrée 432 ne sont pas dans la face longitudinale du connecteur d'alimentation mais dans la face supérieure du connecteur d'alimentation. En variante, il pourrait être dans la face inférieure.

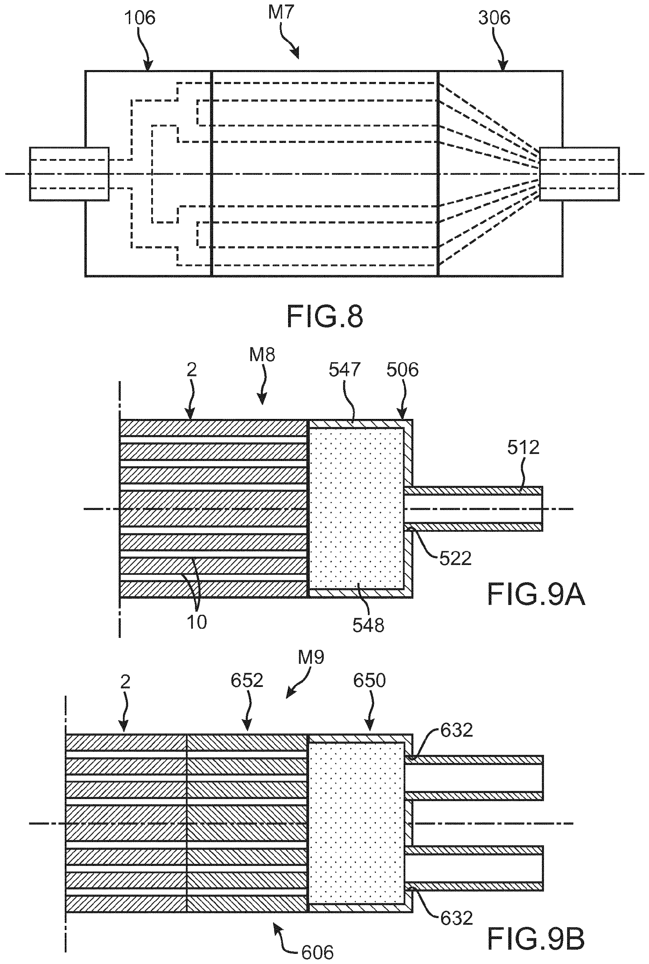

Sur la figure 8, on peut voir un exemple de module de combustion M8 comportant un connecteur d'alimentation 106 et un connecteur d'évacuation symétrique de connecteur d'alimentation 306.

Ce module présente l'avantage de n'avoir qu'un seul orifice d'entrée et qu'un seul orifice de sortie.

Sur la figure 9A, on peut voir un autre exemple de réalisation d'un module de combustion M8 dans lequel le connecteur d'alimentation forme distributeur 506. Seul le corps 2 et le connecteur d'alimentation 506 sont représentés.

Le connecteur 506 comporte un boîtier 547 muni d'une entrée d'alimentation 522 sur une face longitudinale et connectée à un tuyau d'alimentation 512 et une face longitudinale opposée connectée aux chambres de combustion 10 et une structure poreuse isolante thermique 548 disposée dans le boitier entre l'orifice d'entrée et la face de sortie, cette structure poreuse assure la distribution du gaz à toutes les chambres de combustion. La structure poreuse peut être microporeuse ou macroporeuse. La structure peut être réalisée en zircone, mullite ou alumine et présenter des pores de tailles allant que quelques centaines de nanomètres à quelques millimètres. De préférence les pores on un diamètre de quelques millimètres pour limiter les pertes de charges dans l'écoulement des gaz.

Par exemple, elle peut comporter des billes avantageusement en matériau isolant thermique. Cette structure offre l'avantage d'assurer également un mélange des gaz.

Sur la figure 9B, on peut voir une variante de réalisation M9 dans lequel seul le corps 2 et le connecteur d'alimentation 606 sont représentés. Le connecteur d'alimentation 606 comporte deux orifices d'entrée 632, par exemple un dédié à un gaz, par exemple du H₂ et l'autre dédié à un autre gaz, par exemple de l'oxygène ou l'air. Le connecteur d'alimentation comporte également un boîtier un zone de mélange 650 et un zone de distribution 652. La zone de mélange comporte par exemple une structure poreuse et la zone de distribution comporte par exemple autant de canaux de que de chambres de combustion et sont alignés avec celles-ci. La zone de mélange est alimentée en oxygène et en H₂, les deux gaz se mélangent et le mélange s'écoule dans les canaux vers les chambres de combustion.

En variante, la zone de distribution pourrait être en amont et la zone de mélange qui assure aussi une répartition en aval.

La zone de distribution et/ou la zone de mélange sont en matériaux isolants thermiques.

Concernant le collecteur d'évacuation on peut prévoir un collecteur unique connecté à toutes les chambres de combustion.

Le corps peut être réalisé par exemple par les procédés suivants :
- Découpe et perçage d'une pièce massive.
- Usinage de deux demi-pièces dont l'une au moins est usinée sur sa surface pour réaliser les canaux, puis assemblage des deux l'une sur l'autre.
- Techniques d'injection de poudres céramiques (Ceramic Powder Injection en terminologie anglo-saxonne).
- Impression en trois dimensions de la pièce avec ses canaux.

Par ailleurs, la réalisation de la surface catalytique à l'intérieur des canaux de combustion peut être réalisée par imprégnation de catalyseur en phase liquide, par dépôt de catalyseur en phase vapeur, par adjonction d'un élément présentant une surface interne portant le matériau catalytique.

Les connecteurs peuvent être réalisés par les mêmes techniques que le corps.

Les assemblages peuvent être réalisés par exemple par brasage, soudage ou par utilisation de colles techniques hautes températures.

Sur la figure 11, on peut voir une représentation schématique d'un exemple d'un système solaire comportant un module de combustion selon l'invention. Le rayonnement solaire est schématisé par les flèches R.

Le système solaire comporte des moyens de concentration C du rayonnement solaire, un module de combustion MC disposé à l'opposé des moyens de concentration C par rapport au soleil de sorte que la face supérieure du corps soit illuminée par le rayonnement solaire concentré et des modules thermoélectriques MTH dont la face chaude est en contact thermique avec la face inférieure du corps du module

Le système comporte des moyens de commande UC de la combustion de la chambre en fonctionnement du rayonnement solaire concentré de sorte à maintenir une température sensiblement constante sur la face inférieure du corps du module de combustion.

Les moyens de concentration du rayonnement sont par exemple un miroir ou une lentille de Fresnel.

Les modules thermoélectriques peuvent par exemple être remplacés par tout dispositif apte à convertir la chaleur en électricité ou une autre forme d'énergie. Par exemple, des cellules thermophotovoltaïques peuvent être mises en oeuvre; elles ne sont pas en contact physique avec la face chaude mais sont disposées en regard de la face chaude du module.

Le fonctionnement du système solaire va maintenant être décrit.

Lorsque le rayonnement solaire est suffisant il chauffe le corps du module de combustion en frappant sa face supérieure après avoir été concentré.

La chaleur est transférée par conduction à travers le corps jusqu'à la face inférieure, un gradient thermique apparaît alors dans les modules thermoélectriques et de l'électricité est produite. Dans le cas de la conversion thermophotovoltaïque, le rayonnement infrarouge émis par la face chaude est converti en électricité.

Si le rayonnement est insuffisant, par exemple en cas de passage nuageux ou en période de nuit, des gaz sont brûlés dans les chambres de combustion, une chaleur est produite, qui complète celle produite par le rayonnement solaire ou pallie son absence. Un gradient thermique apparaît alors dans les modules thermoélectriques et de l'électricité est produite. Dans le cas de la conversion thermophotovoltaïque, le rayonnement infrarouge émis par la face chaude est converti en électricité.

Le système permet aussi à tout moment de choisir le niveau d'énergie électrique produite en adaptant la contribution de la combustion en faisant varier les flux de gaz. Ceci permet donc une adaptation à la demande.

## Revendications

1. Module de combustion d'un combustible donné ou de combustibles donnés, comportant un corps (2) comprenant une chambre de combustion (4), **caractérisé en ce qu'**il comporte également au moins un connecteur d'alimentation (6, 106, 206, 306, 406, 506, 606) de la chambre de combustion (4) en gaz destiné(s) à être brulé(s) dans la chambre de combustion (4), ledit connecteur d'alimentation (6, 106, 206, 306, 406, 506, 606) comportant au moins un orifice d'entrée destiné à être connecté à au moins une source de gaz par l'intermédiaire d'un conduit et au moins un orifice de sortie destinée à être connectée à la au moins une chambre de combustion (4) et le connecteur d'alimentation (6, 106, 206, 306, 406, 506, 606) présentant une conductivité thermique sensiblement plus faible que celle du corps (2) de telle que sorte que le connecteur d'alimentation (6, 106, 206, 306, 406, 506, 606) assure que la température au niveau de l'orifice d'entrée du connecteur d'alimentation et le conduit soit inférieure à la température d'auto-inflammation du combustible donné ou des combustibles donnés.

2. Module de combustion selon la revendication 1, comportant un connecteur d'évacuation (8) présentant une conductivité thermique sensiblement plus faible que celle du corps.

3. Module de combustion selon la revendication 2, dans lequel le matériau du connecteur d'alimentation (6, 106, 206, 306, 406, 506, 606) et avantageusement le matériau du connecteur d'évacuation (8) ont une conductivité thermique inférieure à 50 W/m.K, préférentiellement inférieure à 10W/m.K.

4. Module de combustion selon la revendication 1, 2 ou 3, dans lequel le corps (2) comporte plusieurs chambres de combustion (4) et le connecteur d'alimentation (106, 306, 506) comporte un orifice d'entrée et autant d'orifices de sortie que de chambres de combustion (4) et un réseau de distribution du combustible entre l'orifice d'entrée et les orifices de sortie.

5. Module de combustion selon les revendications 1, 2 ou 3, dans lequel le corps (2) comporte plusieurs chambres de combustion (4) et le connecteur d'alimentation (6, 206, 406, 606) comporte au moins deux orifices d'entrée et autant d'orifices de sortie que de chambres de combustion (4), un réseau de distribution de gaz entre les orifices d'entrée et les orifices de sortie, et une zone de mélange située en aval des deux orifices d'entrée et en amont ou en aval du réseau de distribution.

6. Module de combustion selon la revendication 4 ou 5, dans lequel le réseau de distribution et/ou la zone de mélange comporte une structure poreuse.

7. Module de combustion selon la revendication 6, dans lequel la structure poreuse est en matériau isolant thermique.

8. Module de combustion selon l'une des revendications 2 à 7, dans lequel le corps (2) comporte plusieurs chambres de combustion (4) et le connecteur d'évacuation (8) comporte des moyens de collecte des gaz de combustion en sortie des chambres de combustion et un orifice de sortie.

9. Module de combustion selon l'une des revendications 1 à 8, dans lequel le connecteur d'alimentation (6) comporte des moyens d'emboîtement (14) dans le corps au niveau de la connexion entre la au moins une chambre de combustion (4) et un orifice de sortie du connecteur d'alimentation (6).

10. Module de combustion selon l'une des revendications 1 à 9, dans lequel le corps (2) présente sensiblement la forme d'un parallélépipède rectangle comprenant deux faces de plus grandes surfaces, reliées par deux faces latérales et deux faces d'extrémité, au moins une chambre de combustion débouchant dans les faces d'extrémité.

11. Module de combustion selon l'une des revendications 2 à 10, dans lequel le corps (2) est en SiC et le connecteur d'alimentation (6) et le connecteur d'évacuation (8) sont en zircone.

12. Dispositif de combustion comportant au moins un module de combustion selon l'une des revendications précédentes, au moins une source de gaz et un conduit (12) connecté à l'orifice d'entrée du connecteur d'alimentation et à la source de combustible.

13. Dispositif de combustion selon la revendication précédente, comportant une source de combustible et une source de comburant, par exemple une source de H₂ et une source d'oxygène respectivement, et dans lequel le connecteur d'alimentation comporte soit deux orifices d'entrée connectés chacun à une source, soit un seul orifice d'entrée connecté à un dispositif mélangeur connecté aux deux sources.

14. Système solaire hybride comportant des moyens de concentration (C) du rayonnement solaire, au moins un module de combustion (MC) selon l'une des revendications 1 à 11 ou un dispositif de combustion selon la revendication 12 ou 13, le module ou le dispositif étant disposé de sorte que les rayonnement concentré éclaire une face du corps et des moyens de conversion (MTH) d'une énergie thermique en électricité sur une face opposée à celle éclairée par le rayonnement solaire concentré, et des moyens de commande (UC) de la combustion dans le module de combustion en fonction du rayonnement solaire concentré.

15. Système solaire hybride selon la revendication précédente, dans lequel les moyens de concentration du rayonnement solaire comportent au moins un miroir ou une lentille de Fresnel.

## Patentansprüche

1. Modul zum Verbrennen eines gegebenen Brennstoffs oder gegebener Brennstoffe, umfassend einen Körper (2), welcher eine Brennkammer (4) umfasst, **dadurch gekennzeichnet, dass** es ferner wenigstens einen Anschluss zum Versorgen (6, 106, 206, 306, 406, 506, 606) der Brennkammer (4) mit Gas/Gasen umfasst, welches/welche dazu vorgesehen ist/sind, in der Brennkammer (4) verbrannt zu werden, wobei der Anschluss zum Versorgen (6, 106, 206, 306, 406, 506, 606) wenigstens eine Eingangsöffnung umfasst, welche dazu vorgesehen ist, mit wenigstens einer Gasquelle mittels einer Leitung verbunden zu sein, sowie eine Ausgangsöffnung, welche dazu vorgesehen ist, mit der wenigstens einen Brennkammer (4) verbunden zu sein, und wobei der Anschluss zum Versorgen (6, 106, 206, 306, 406, 506, 606) eine Wärmeleitfähigkeit aufweist, welche wesentlich kleiner als diejenige des Körpers (2) ist, so dass der Anschluss zum Versorgen (6, 106, 206, 306, 406, 506, 606) sicherstellt, dass die Temperatur auf dem Niveau der Eingangsöffnung des Anschlusses zum Versorgen und der Leitung niedriger ist als die Selbstentzündungstemperatur des gegebenen Brennstoffs oder der gegebenen Brennstoffe.

2. Modul zum Verbrennen nach Anspruch 1, umfassend einen Auslassanschluss (8), welcher eine Wärmeleitfähigkeit aufweist, welche wesentlich kleiner ist als diejenige des Körpers.

3. Modul zum Verbrennen nach Anspruch 2, wobei das Material des Anschlusses zum Verbinden (6, 106, 206, 306, 406, 506, 606) und vorzugsweise das Material des Auslassanschlusses (8) eine Wärmeleitfähigkeit aufweisen, welche kleiner als 50 W/m.K ist, vorzugsweise kleiner als 10 W/m.K.

4. Modul zum Verbrennen nach Anspruch 1, 2 oder 3, wobei der Körper (2) mehrere Brennkammern (4) umfasst und der Anschluss zum Versorgen (106, 306, 506) eine Eingangsöffnung und ebenso viele Ausgangsöffnungen wie Brennkammern (4) und ein Verteilernetz für den Brennstoff zwischen der Eingangsöffnung und den Ausgangsöffnungen umfasst.

5. Modul zum Verbrennen nach den Ansprüchen 1, 2 oder 3, wobei der Körper (2) mehrere Brennkammern (4) umfasst und der Anschluss zum Versorgen (6, 206, 406, 606) wenigstens zwei Eingangsöffnungen und ebenso viele Ausgangsöffnungen wie Brennkammern (4), ein Verteilernetz für Gas zwischen den Eingangsöffnungen und den Ausgangsöffnungen und eine Mischzone umfasst, welche stromabwärts der beiden Eingangsöffnungen und stromaufwärts oder stromabwärts des Verteilernetzes angeordnet ist.

6. Modul zum Verbrennen nach Anspruch 4 oder 5, wobei das Verteilernetz und/oder die Mischzone eine poröse Struktur umfassen.

7. Modul zum Verbrennen nach Anspruch 6, wobei die poröse Struktur aus einem thermisch isolierenden Material besteht.

8. Modul zum Verbrennen nach einem der Ansprüche 2 bis 7, wobei der Körper (2) mehrere Brennkammern (4) umfasst und der Auslassanschluss (8) Mittel zum Sammeln der die Brennkammern verlassenden Brenngase und eine Ausgangsöffnung umfasst.

9. Modul zum Verbrennen nach einem der Ansprüche 1 bis 8, wobei der Anschluss zum Versorgen (6) Mittel zum Verfalzen (14) in dem Körper auf dem Niveau der Verbindung zwischen der wenigstens einen Brennkammer (4) und einer Ausgangsöffnung des Anschlusses zum Versorgen (6) umfasst.

10. Modul zum Verbrennen nach einem der Anschlüsse 1 bis 9, wobei der Körper (2) im Wesentlichen die Form eines rechteckigen Parallelepipeds aufweist, umfassend zwei Flächen mit größeren Oberflächen, welche durch zwei laterale Flächen und zwei Endflächen verbunden sind, wobei wenigstens eine Brennkammer an den Endflächen mündet.

11. Modul zum Verbrennen nach einem der Ansprüche 2 bis 10, wobei der Körper (2) aus SiC besteht und der Anschluss zum Versorgen (6) und der Auslassanschluss (8) aus Zirkon bestehen.

12. Vorrichtung zum Verbrennen, umfassend wenigstens ein Modul zum Verbrennen nach einem der vorhergehenden Ansprüche, wenigstens eine Gasquelle und eine mit der Eingangsöffnung des Anschlusses zum Versorgen und der Brennstoffquelle verbundene Leitung (12).

13. Vorrichtung zum Verbrennen nach dem vorhergehenden Anspruch, umfassend eine Brennstoffquelle und eine Brandfördermittel-Quelle, beispielsweise eine Quelle für H₂ bzw. eine Quelle für Sauerstoff, und wobei der Anschluss zum Versorgen zwei Eingangsöffnungen, welche jeweils mit einer Quelle verbunden sind, oder eine einzelne Eingangsöffnung umfasst, welche mit einer Mischvorrichtung verbunden ist, welche mit den beiden Quellen verbunden ist.

14. Hybrid-Solarsystem, umfassend Mittel zum Konzentrieren (C) von Sonnenstrahlung, wenigstens ein Modul zum Verbrennen (MC) nach einem der Ansprüche 1 bis 11 oder eine Vorrichtung zum Verbrennen nach dem Anspruch 12 oder 13, wobei das Modul oder die Vorrichtung derart angeordnet ist, dass die konzentrierte Strahlung eine Fläche des Körpers beleuchtet, sowie Mittel zum Umwandeln (MTH) einer thermischen Energie in Elektrizität an einer Fläche gegenüber der durch die konzentrierte Sonnenstrahlung beleuchteten Fläche, und Steuermittel (UC) für die Verbrennung in dem Modul zum Verbrennen in Abhängigkeit von der konzentrierten Sonnenstrahlung.

15. Hybrid-Solarsystem nach dem vorhergehenden Anspruch, wobei die Mittel zum Konzentrieren der Sonnenstrahlung wenigstens einen Spiegel oder eine Fresnel-Linse umfassen.

## Claims

1. Combustion module of a given combustible or given combustibles, comprising a body (2) including a combustion chamber (4), **characterized in that** it alos comprises at least one connector (6, 106, 206, 306, 406, 506, 606) for supplying the combustion chamber (4) with gas or gases intended to be burned in the combustion chamber (4), said supply connector (6, 106, 206, 306, 406, 506, 606) comprising at least one inlet orifice configured to be connected to at least one source of gas through a conduit and at least one outlet orifice configured to be connected to the at least one combustion chamber (4) and the supply connector (6, 106, 206, 306, 406, 506, 606) having a thermal conductivity substantially lower than that of the body (2) such that the supply connector (6, 106, 206, 306, 406, 506, 606) assures that the temperature at the inlet orifice of the supply connector and the conduit is lower than the auto-ignition temperature of the given combustible or given combustibles.

2. Combustion module according to claim 1, comprising an evacuation connector (8) having a thermal conductivity substantially lower than that of the body.

3. Combustion module according to claim 2, in which the material of the supply connector (6, 106, 206, 306, 406, 506, 606) and advantageously the material of the evacuation connector (8) have a thermal conductivity less than 50 W/m.K, preferentially less than 10W/m.K.

4. Combustion module according to claim 1, 2 or 3, in which the body (2) comprises several combustion chambers (4) and the supply connector (106, 306, 506) comprises an inlet orifice and as many outlet orifices as combustion chambers (4) and a network for distributing combustible between the inlet orifice and the outlet orifices.

5. Combustion module according to claim 1, 2 or 3, in which the body (2) comprises several combustion chambers (4) and the supply connector (6, 206, 406, 606) comprises at least two inlet orifices and as many outlet orifices as combustion chambers (4), a network for distributing gas between the inlet orifices and the outlet orifices, and a mixing zone situated downstream of the two inlet orifices and upstream or downstream of the distribution network.

6. Combustion module according to claim 4 or 5, in which the distribution network and/or the mixing zone comprises a porous structure.

7. Combustion module according to claim 6, in which the porous structure is made of heat insulating material.

8. Combustion module according to one of claims 2 to 7, in which the body (2) comprises several combustion chambers (4) and the evacuation connector (8) comprises means for collecting combustion gases at the outlet of the combustion chambers and an outlet orifice.

9. Combustion module according one of claims 1 to 8, in which the supply connector (6) comprises means for interlocking (14) in the body at the connection between the at least one combustion chamber (4) and an outlet orifice of the supply connector (6).

10. Combustion module according one of claims 1 to 9, in which the body (2) has substantially the shape of a rectangular parallelepiped including two faces of larger surfaces, connected by two lateral faces and two end faces, the at least one combustion chamber emerging in the end faces.

11. Combustion module according one of the claims 2 to 10, in which the body (2) is made of SiC and the supply connector (6) and the evacuation connector (8) are made of zirconium oxide.

12. Combustion device comprising at least one combustion module according one of the preceding claims, at least one gas source and one conduit (12) connected to the inlet orifice of the supply connector and to the source of combustible.

13. Combustion device according to the preceding claim, comprising a source of combustible and a source of oxidizer, for example a source of H₂ and a source of oxygen respectively, and in which the supply connector comprises either two inlet orifices each connected to a source, or a single inlet orifice connected to a mixing device connected to the two sources.

14. Hybrid solar system comprising means for concentrating (C) solar radiation, at least one combustion module (MC) according to one of claims 1 to 11 or a combustion device according to claim 12 or 13, the module or the device being arranged such that concentrated radiation illuminates one face of the body and means for converting (MTH) thermal energy into electricity on one face opposite to that illuminated by the concentrated solar radiation, and means for controlling (UC) combustion in the combustion module as a function of the concentrated solar radiation.

15. Hybrid solar system according to the preceding claim, in which the means for concentrating solar radiation comprise at least one mirror or Fresnel lens.
